(19) **Europäisches Patentamt**

**European Patent Office**

**Office européen des brevets**

(11) **EP 1 367 083 A2**

(12) **EUROPEAN PATENT APPLICATION**

(43) Date of publication:
**03.12.2003 Bulletin 2003/49**

(51) Int Cl.⁷: **C08J 5/18**, B29C 47/06
// B32B27/00

(21) Application number: **03076360.1**

(22) Date of filing: **08.05.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **20.05.2002 US 381931**
**03.07.2002 US 190169**

(71) Applicant: **EASTMAN KODAK COMPANY**
**Rochester, New York 14650 (US)**

(72) Inventor: **Bermel, Marcus S.**
**Rochester, New York 14650-2201 (US)**

(74) Representative: **Haile, Helen Cynthia et al**
**Kodak Limited**
**Patent, W92-3A,**
**Headstone Drive**
**Harrow, Middlesex HA1 4TY (GB)**

(54) **Optical films prepared by coating methods**

(57) A method of film fabrication is taught that uses a coating and drying apparatus to fabricate resin films suitable for optical applications. In particular, resin films are prepared by simultaneous application of multiple liquid layers to a moving carrier substrate. After solvent removal, the resin films are peeled from the sacrificial carrier substrate. Films prepared by the current invention exhibit good dimensional stability and low birefringence.

**EP 1 367 083 A2**

**Description**

**CROSS REFERENCE TO RELATED APPLICATIONS**

This is a 111A Application of Provisional Application, Serial No. 06/381,931, filed on May 20, 2002

**FIELD OF THE INVENTION**

This invention relates generally to methods for manufacturing resin films and, more particularly, to an improved method for the manufacture of optical films used to form electrode substrates, light polarizers, compensation plates, and protective covers in optical devices such as liquid crystal displays and other electronic displays.

**BACKGROUND OF THE INVENTION**

Transparent resin films are used in a variety of optical applications. In particular, resin films are used as protective covers for light polarizers, as polarizer sheets, as compensation plates, and as electrode substrates in variety of electronic displays. In this regard, optical films are intended to replace glass to produce lightweight, flexible display screens. These display screens include liquid crystal displays, OLED (organic light emitting diode) displays, and other electronic displays found in, for example, personal computers, televisions, cell phones, and instrument panels.

Electronic display screens such as liquid crystal displays (LCD's) contain a number of optical elements that may be formed from resin films. The structure of reflective LCD's may include a liquid crystal cell, one or more polarizer plates, and one or more compensation films. Liquid crystals cells are formed by dispersing twisted nematic (TN) or super twisted nematic (STN) materials between two electrode substrates. For liquid crystals cells, resin substrates have been suggested as lightweight and flexible alternatives to glass substrates. Like glass, resin electrode substrates must be transparent, exhibit very low birefringence, and withstand the high temperatures required to vapor deposit a transparent conductive material, such as indium-tin oxide, onto the surface of the film. Suitable thermally stable resins suggested for electrode substrates include polycarbonates, sulfones, cyclic olefins, and polyarylates.

Polarizer plates are typically a multilayer composite of resin films and are comprised of a polarizing film sandwiched between two protective covers. Polarizing films are normally prepared from a transparent and highly uniform amorphous resin film that is subsequently stretched to orient the polymer molecules and stained with a dye to produce a dichroic film. An example of a suitable resin for the formation of polarizer films is fully hydrolyzed polyvinyl alcohol. Because the stretched polyvinyl alcohol films used to form polarizers are very fragile and dimensionally unstable, protective covers are normally needed to offer both support and abrasion resistance. Protective covers of polarizer plates are required to have good dimensional stability, high transparency, and very low birefringence. Originally, protective covers were formed from glass, but a number of resin films are now used to produce lightweight and flexible polarizers. Although many resins have been suggested as protective covers including, cellulosics, acrylics, polycarbonates, and sulfones, cellulose triacetate is most commonly used as a protective cover for polarizer plates.

Finally, some LCD devices may contain compensation films to improve the viewing angle of an image. Compensation films (i.e. retardation films or phase difference films) are normally prepared from amorphous films that have a controlled level of birefringence either by uniaxial stretching or by coating with discotic dyes. Suitable resins suggested for formation of compensation films by stretching include polyvinyl alcohols, polycarbonates and sulfones. Compensation films prepared by treatment with dyes normally require highly transparent films having low birefringence such as cellulose acetate and acrylics.

Regardless of their end usage, the precursor resin films used to prepare the various types of optical components described above are generally desired to have high transparency, high uniformity, and low birefringence. Moreover, these films may be needed in a range of thickness depending on the final application.

In general, resin films are prepared either by melt extrusion methods or by casting methods. Melt extrusion methods involve heating the resin until molten (approximate viscosity on the order of 100,000 cp), and then applying the hot molten polymer to a highly polished metal band or drum with an extrusion die, cooling the film, and finally peeling the film from the metal support. For many reasons, however, films prepared by melt extrusion are generally not suitable for optical applications. Principal among these is the fact that melt extruded films exhibit a high degree of optical birefringence. In the case of many polymers there is the additional problem of melting the polymer. For example, highly saponified polyvinyl alcohol has a very high melting temperature of 230 degrees Celsius, and this is above the temperature where discoloration or decomposition begins (~200 degrees Celsius). Similarly, cellulose triacetate polymer has a very high melting temperature of 270-300°C, and this is above the temperature where decomposition begins. In addition, melt extruded films are known to suffer from other artifacts such as poor flatness, pinholes and inclusions. Such imperfections may compromise the optical and mechanical properties of optical films. For these reasons, melt extrusion methods are generally not suitable for fabricating many resin films intended for optical applications. Rather, casting methods are generally used to producing these films.

Resin films for optical applications are manufactured almost exclusively by casting methods. Casting methods involve first dissolving the polymer in an appropriate solvent to form a dope having a high viscosity on the order of 50,000 cp, and then applying the viscous dope to a continuous highly polished metal band or drum through an extrusion die, partially drying the wet film, peeling the partially dried film from the metal support, and conveying the compared to films prepared by melt extrusion methods, and problems associated with high temperature processing are avoided.

Examples of optical films prepared by casting methods include: 1.) Polyvinyl alcohol sheets used to prepare light polarizers as disclosed in U. S. Patent no. 4,895,769 to Land and U. S. Patent no. 5,925,289 to Cael as well as more recent disclosures in U. S. Patent Application. Serial no. 2001/0039319 A1 to Harita and U. S. Patent Application. Serial no.. 2002/001700 A1 to Sanefuji, 2.) Cellulose triacetate sheets used for protective covers for light polarizers as disclosed in U. S. Patent no. 5,695,694 to Iwata, 3.) Polycarbonate sheets used for protective covers for light polarizers or for retardation plates as disclosed in U. S. Patent no. 5,818,559 to Yoshida and U. S. Patent nos. 5,478,518 and 5,561,180 both to Taketani, and 4.) Polysulfone sheets used for protective covers for light polarizers or for retardation plates as disclosed in U. S. Patent nos. 5,611,985 to Kobayashi and U. S. Patent nos. 5,759,449 and 5,958,305 both to Shiro.

One disadvantage to the casting method is that cast films have significant optical birefringence. Although films prepared by casting methods have lower birefringence when compared to films prepared by melt extrusion methods, birefringence remains objectionably high. For example, cellulose triacetate films prepared by casting methods exhibit in-plane retardation of 7 nanometers (nm) for light in the visible spectrum as disclosed in U. S. Patent no. 5,695,694 to Iwata. A polycarbonate film prepared by the casting method is disclosed as having an in-plane retardation of 17 nm in U. S. Patent nos. 5,478,518 and 5,561,180 both to Taketani. U. S. Patent Application. Serial no. 2001/0039319 A1 to Harita claims that color irregularities in stretched polyvinyl alcohol sheets are reduced when the difference in retardation between widthwise positions within the film is less than 5 nm in the original unstretched film. For many applications of optical films, low in-plane retardation values are desirable. In particular, values of in-plane retardation of less than 10 nm are preferred.

Birefringence in cast films arises from orientation of polymers during the manufacturing operations. This molecular orientation causes indices of refraction within the plane of the film to be measurably different. In-plane birefringence is the difference between these indices of refraction in perpendicular directions within the plane of the film. The absolute value of birefringence multiplied by the film thickness is defined as in-plane retardation. Therefore, in-plane retardation is a measure of molecular anisotropy within the plane of the film.

During the casting process, molecular orientation may arise from a number of sources, including shear of the dope in the die, shear of the dope by the metal support during application, shear of the partially dried film during the peeling step, and shear of the free-standing film during conveyance through the final drying step. These shear forces orient the polymer molecules and ultimately give rise to undesirably high birefringence or retardation values. To minimize shear and obtain the lowest birefringence films, casting processes are typically operated at very low line speeds of 1-15 m/min as disclosed in U. S. Patent no. 5,695,694 to Iwata. Slower line speeds generally produce the highest quality films.

Another drawback to the casting method is the inability to accurately apply multiple layers. As noted in U. S. Patent no. 5,256,357 to Hayward, conventional multi-slot casting dies create unacceptably non-uniform films. In particular, line and streak non-uniformity is greater than 5% with prior art devices. Acceptable two layer films may be prepared by employing special die lip designs as taught in U. S. Patent no. 5,256,357 to Hayward, but the die designs are complex and may be impractical for applying more than two layers simultaneously.

Another drawback to the casting method is the restrictions on the viscosity of the dope. In casting practice, the viscosity of dope is on the order of 50,000 cp. For example, U. S. Patent no. 5,256,357 to Hayward describes practical casting examples using dopes with a viscosity of 100,000 cp. In general, cast films prepared with lower viscosity dopes are known to produce non-uniform films as noted for example in U. S. Patent no. 5,695,694 to Iwata. In U. S. Patent no. 5,695,694 to Iwata, the lowest viscosity dopes used to prepare casting samples are approximately 10,000 cp. At these high viscosity values, however, casting dopes are difficult to filter and degas. While fibers and larger debris may be removed, softer materials such as polymer slugs are more difficult to filter at the high pressures found in dope delivery systems. Particulate and bubble artifacts create conspicuous inclusion defects as well as streaks and may create substantial waste.

In addition, the casting method can be relatively inflexible with respect to product changes. Because casting requires high viscosity dopes, changing product formulations requires extensive down time for cleaning delivery systems to eliminate the possibility of contamination. Particularly problematic are formulation changes involving incompatible polymers and solvents. In fact, formulation changes are so time consuming and expensive with the casting method that most production machines are dedicated exclusively to producing only one film type.

The manufacture of resin films by the casting method is also confounded by a number of artifacts associated the stripping and conveyance operations. Stripping operations, for example, frequently require converting aids such as special co-solvents or additives in the casting formulation to facilitate peeling of the film from the metal substrate without creating streak artifacts. In fact, stripping can be so problematic that some films such as polymethylmethacrylate films can not be manufactured by casting methods without resorting to specialty co-polymers as noted in U. S. Patent nos. 4,584,231 and 4,664,859 both to Knoop. In addition to stripping artifacts, cast films may be damaged during conveyance across numerous rollers during the final drying operation. For example, abrasion, scratch and wrinkle artifacts have be noted in polycarbonate films as described in U. S. Patent no. 6,222,003B1 to Hosoi. To minimize damage during conveyance, cast polycarbonate films require special additives that act as lubricants or surface modifiers, or require a protective laminate sheet, or require knurled edges. However, special additives may compromise film clarity. Moreover, lamination and edge knurling devices are expensive and add complexity to the casting process.

Finally, cast films may exhibit undesirable cockle or wrinkles. Thinner films are especially vulnerable to dimensional artifacts either during the peeling and drying steps of the casting process or during subsequent handling of the film. In particular, the preparation of composite optical plates from resin films requires a lamination process involving application of adhesives, pressure, and high temperatures. Very thin films are difficult to handle during this lamination process without wrinkling. In addition, many cast films may naturally become distorted over time due to the effects of moisture. For optical films, good dimensional stability is necessary during storage as well as during subsequent fabrication of composite optical plates.

It is therefore an object of the present invention to overcome the limitations of prior art casting methods and provide a new coating method for preparing amorphous polymeric films having very low in-plane birefringence.

It is a further object of the present invention to provide a new method of producing highly uniform polymeric films over a broad range of dry thicknesses.

Yet another object of the present invention is to provide a method of preparing polymeric films by simultaneously applying multiple layers to a moving substrate.

Still another object of the present invention is to provide a new method of preparing polymeric films with improved dimensional stability and handling ability by temporarily adhering the resin film to a supporting carrier substrate at least until it is substantially dry and then subsequently separating the carrier substrate from the resin film.

A further object of the present invention is to overcome the limitations of the prior art casting method and define a new coating method for preparing resin films without the need for co-solvents, lubricants, or protective laminates as converting aids to minimize artifacts created during stripping or conveyance operations.

Briefly stated, the foregoing and numerous other features, objects and advantages of the present invention will become readily apparent upon review of the detailed description, claims and drawings set forth herein. These features, objects and advantages are accomplished by applying a low viscosity fluid containing polymeric resins onto a moving carrier substrate by a coating method. The resin film is not separated from the carrier substrate until the coated film is substantially dry (< 10% residual solvent by weight). In fact, the composite structure of resin film and carrier substrate may be wound into rolls and stored until needed. Thus, the carrier substrate cradles the optical resin film and protects against shearing forces during conveyance through the drying process. Moreover, because the resin film is dry and solid when it is finally peeled from the carrier substrate, there is no shear or orientation of polymer within the film due to the peeling process. As a result, films prepared by the current invention are remarkably amorphous and exhibit very low in-plane birefringence.

Polymeric films can be made with the method of the present invention having a thickness of about 1 to 500 μm. Very thin resin films of less than 40 microns can be easily manufactured at line speeds not possible with prior art methods. The fabrication of very thin films is facilitated by a carrier substrate that supports the wet film through the drying process and eliminates the need to peel the film from a metal band or drum prior to a final drying step as required in the casting methods described in prior art. Rather, the film is substantially if not completely dried before separation from the carrier substrate. In all cases, dried resin films have a residual solvent content of less than 10% by weight. In a preferred embodiment of the present invention, the residual solvent content is less than 5%, and most preferably less than 1%. Thus, the present invention readily allows for preparation of very delicate thin films not possible with the prior art casting method. In addition, thick films of greater than 40 μm may also be prepared by the method of the present invention. To fabricate thicker films, additional coatings may be applied over a film-substrate composite either in a tandem operation or in an offline process without comprising optical quality. In this way, the method of the present invention overcomes the limitation of solvent removal during the preparation of thicker films since the first applied film is dry before application of a subsequent wet film. Thus, the present invention allows for a broader range of final film thickness than is possible with casting methods.

In the method of the present invention, resin films are created by forming a single layer or, preferably, a multilayer composite on a slide surface of a coating hopper, the multilayer composite including a bottom layer of low viscosity, one or more intermediate layers, and an optional top layer containing a surfactant, flowing the multilayer composite down the slide surface and over a coating lip of the coating hopper, and applying the multilayer composite to a moving substrate. In particular, the use of the method of the present invention is shown to allow for application of several liquid layers having unique composition. Coating aids and additives may be placed in specific layers to improve film performance or improve manufacturing robustness. For example, multilayer application allows a surfactant to be placed in the top spreading layer where needed rather than through out the entire wet film. In another example, the concentration of polymer in the lowermost layer may be adjusted to achieve low viscosity and facilitate high-speed application of the multilayer composite onto the carrier substrate. Therefore, the present invention provides an advantageous method for the fabrication of multiple layer composite films such as required for certain optical elements or other similar elements.

Wrinkling and cockle artifacts are minimized with the method of the present invention through the use of the carrier substrate. By providing a stiff backing for the resin film, the carrier substrate minimizes dimensional distortion of the optical film. This is particularly advantageous for handling and processing very thin films of less than about 40 microns. Moreover, scratches and abrasion artifacts that are known to be created by the casting method are avoided with the method of the present invention since the carrier substrate lies between the resin film and potentially abrasive conveyance rollers during all drying operations. Thus, the method of the present invention does not require the use of co-solvents, lubricants or protective laminates as converting aids as are needed in casting operations to minimize abrasion artifacts. In addition, the restraining nature of the carrier substrate also eliminates the tendency of resin films to distort or cockle over time as a result of changes in moisture levels. Thus, the method of the current invention insures that polymeric optical films are dimensionally stable during preparation and storage as well as during final handling steps necessary for fabrication of optical elements.

In the practice of the method of the present invention it is preferred that the substrate be a discontinuous sheet such as polyethylene terephthalate (PET). The PET carrier substrate may be pretreated with a subbing layer or an electrical discharge device to modify adhesion between the resin film and the PET substrate. In particular, a subbing layer or electrical discharge treatment may enhance the adhesion between the film and the substrate, but still allow the film to be subsequently peeled away from the substrate.

Although the present invention is discussed herein with particular reference to a slide bead coating operation, those skilled in the art will understand that the present invention can be advantageously practiced with other coating operations. For example, freestanding films having low in-plane retardation should be achievable with single or multiple layer slot die coating operations and single or multiple layer curtain coating operations. Moreover, those skilled in the art will recognize that the present invention can be advantageously practiced with alternative carrier substrates. For example, peeling films having low in-plane birefringence should be achievable with other resin supports [e.g. polyethylene naphthalate (PEN), cellulose acetate, PET], paper supports, resin laminated paper supports, and metal supports (e.g. aluminum).

Practical applications of the present invention include the preparation of polymeric films used as optical films, laminate films, release films, photographic films, and packaging films among others. In particular, resin films prepared by the method of the present invention may be utilized as optical elements in the manufacture of electronic displays such as liquid crystal displays. For example, liquid crystal displays are comprised of a number of film elements including polarizer plates, compensation plates and electrode substrates. Polarizer plates are typically a multilayer composite structure having dichroic film (normally stretched polyvinyl alcohol treated with iodine) with each surface adhered to a protective cover having very low in-plane birefringence. The low birefringence films prepared by the method of the present invention are suitable protective covers and also as precursor films for the formation light polarizers. The resin films prepared by the method of the present invention are also suitable for the manufacture of compensation plates and electrode substrates.

The films produced with the method of the present invention are optical films. As produced the films made with the method of the present invention will have a light transmittance of at least about 85 percent, preferably at least about 90 percent, and most preferably, at least about 95 percent. Further, as produced the films will have a haze value of less than 1.0 percent. In addition, the films are smooth with a surface roughness average of less than 100 nm and most preferrably with a surface roughness of less than 50 nm.

The terms "optical resins" and "optical films" as used herein are used to describe any polymeric material that forms a high clarity film with high light transmittance (i.e. > 85%) and low haze values (i.e.<1.0%). Examplary optical resins include those described here, i.e. cellulose triaceate, polyvinyl alcohol, polycarbonate, polyethersulfone, polymethylmethacrylate, and polyvinylbutyral. Other potential optical resins might include fluoropolymers (polyvinylidene fluoride, polyvinyl fluoride, and polycholorotrifluorethene), other cellulosics (cellulose diacetate, cellulose acetate butyrate, cellulose acetate propionate, ethylcellulose), polyoefins (cyclic olefin polymers), polystyrene, aromatic polyesters (polyarylates and polyethylene terephthalate), sulfones (polysulfones, polyethersulfones, polyarylsulfone), and polycarbonate co-polymers, among others.

Figure 1 is a schematic of an exemplary coating and drying apparatus that can be used in the practice of the method of the present invention.

Figure 2 is a schematic of an exemplary coating and drying apparatus of Figure 1 including a station where the resin web separated from the substrate is separately wound.

Figure 3 is a schematic of an exemplary multi-slot coating apparatus that can be used in the practice of the method of the present invention.

Figure 4 shows a cross-sectional representation of a single-layer resin film partially peeled from a carrier substrate and formed by the method of the present invention.

Figure 5 shows a cross-sectional representation of a single-layer resin film partially peeled from a carrier substrate and formed by the method of the present invention wherein the carrier substrate has a subbing layer formed thereon.

Figure 6 shows a cross-sectional representation of a multi-layer resin film partially peeled from a carrier substrate and formed by the method of the present invention.

Figure 7 shows a cross-sectional representation of a multi-layer resin film partially peeled from a carrier substrate and formed by the method of the present invention wherein the carrier substrate has a subbing layer formed thereon.

Figure 8 is a schematic of a casting apparatus as used in prior art to cast resin films.

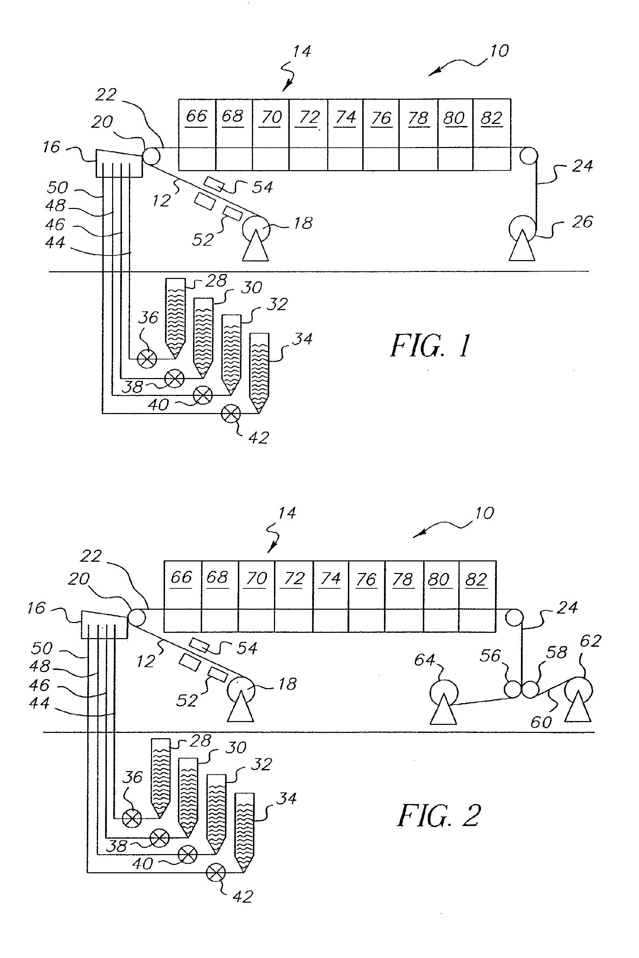

Turning first to Figure 1 there is shown a schematic of an exemplary and well known coating and drying system 10 suitable for practicing the method of the present invention. The coating and drying system 10 is typically used to apply very thin films to a moving substrate 12 and to subsequently remove solvent in a dryer 14. A single coating apparatus 16 is shown such that system 10 has only one coating application point and only one dryer 14, but two or three (even as many as six) additional coating application points with corresponding drying sections are known in the fabrication of composite thin films. The process of sequential application and drying is known in the art as a tandem coating operation.

Coating and drying apparatus 10 includes an unwinding station 18 to feed the moving substrate 12 around a back-up roller 20 where the coating is applied by coating apparatus 16. The coated web 22 then proceeds through the dryer 14. In the practice of the method of the present invention the final dry film 24 comprising a resin film on substrate 12 is wound into rolls at a wind-up station 26.

As depicted, an exemplary four-layer coating is applied to moving web 12. Coating liquid for each layer is held in respective coating supply vessel 28, 30, 32, 34. The coating liquid is delivered by pumps 36, 38, 40, 42 from the coating supply vessels to the coating apparatus 16 conduits 44, 46, 48, 50, respectively. In addition, coating and drying system 10 may also include electrical discharge devices, such as corona or glow discharge device 52, or polar charge assist device 54, to modify the substrate 12 prior to application of the coating.

Turning next to Figure 2 there is shown a schematic of the same exemplary coating and drying system 10 depicted in Figure 1 with an alternative winding operation. Accordingly, the drawings are numbered identically up to the winding operation. In the practice of the method of the present invention, the dry film 24 comprising a substrate (which may be a resin film, paper, resin coated paper or metal) with a resin coating applied thereto is taken between opposing rollers 56, 58. The resin film 60 is peeled from substrate 12 with the optical film going to winding station 62 and the substrate 12 going to winding station 64. In a preferred embodiment of the present invention, polyethylene terephthalate (PET) is used as the substrate 12. The substrate 12 may be pretreated with a subbing layer to enhance adhesion of the coated film 60 to the substrate 12.

The coating apparatus 16 used to deliver coating fluids to the moving substrate 12 may be a multilayer applicator such as a slide bead hopper, as taught for example in U. S. Patent no. 2,761,791 to Russell, or a slide curtain hopper, as taught by U. S. Patent no. 3,508,947 to Hughes. Alternatively, the coating apparatus 16 may be a single layer applicator, such as a slot die hopper or a jet hopper. In a preferred embodiment of the present invention, the application device 16 is a multilayer slide bead hopper.

As mentioned above, coating and drying system 10 includes a dryer 14 that will typically be a drying oven to remove solvent from the coated film. An exemplary dryer 14 used in the practice of the method of the present invention includes a first drying section 66 followed by eight additional drying sections 68-82 capable of independent control of temperature and air flow. Although dryer 14 is shown as having nine independent drying sections, drying ovens with fewer compartments are well known and may be used to practice the method of the present invention. In a preferred embodiment of the present invention the dryer 14 has at least two independent drying zones or sections.

Preferably, each of drying sections 68 - 82 each has independent temperature and airflow controls. In each section, temperature may be adjusted between 5°C and 150°C. To minimize drying defects from case hardening or skinning-over of the wet film, optimum drying rates are needed in the early sections of dryer 14. There are a number of artifacts created when temperatures in the early drying zones are inappropriate. For example, fogging or blush of polycarbonate films is observed when the temperature in zones 66, 68 and 70 are set at 25 °C. This blush defect is particularly problematic when high vapor pressures solvents (methylene chloride and acetone) are used in the coating fluids. Aggressively high temperatures are also associated with other artifacts such as case hardening, reticulation patterns and microvoids in the resin film. In a preferred embodiment of the present invention, the first drying section 66 is operated at a temperature of at least about 25 °C but less than 95 °C with no direct air impingement on the wet coating of the coated web 22. In another preferred embodiment of the method of the present invention, drying sections 68 and 70 are also operated at a temperature of at least about 25 °C but less than 95 °C. The actual drying temperature in drying sections 66, 68 may be optimized empirically within this range by those skilled in the art.

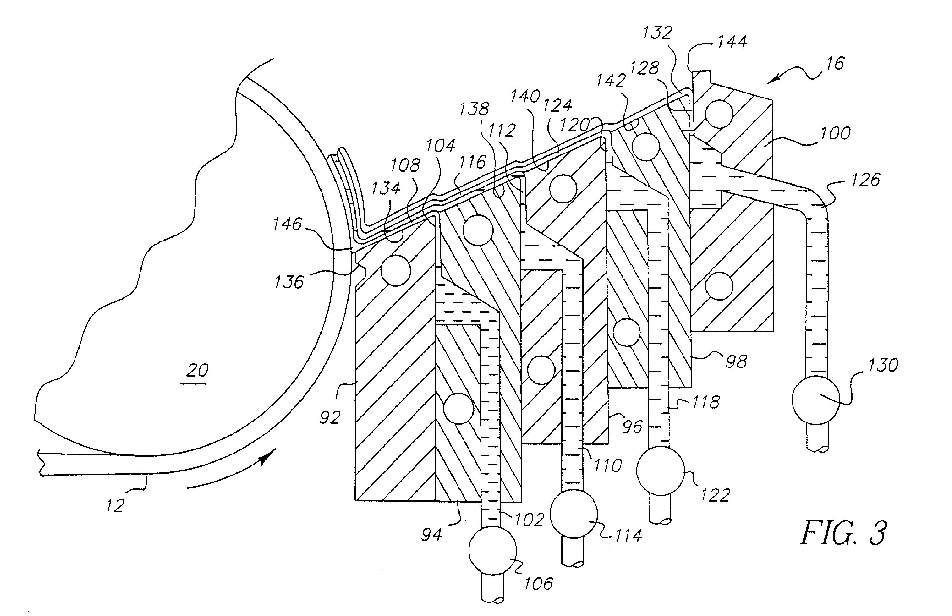

Referring now to Figure 3, a schematic of an exemplary coating apparatus 16 is shown in detail. Coating apparatus 16, schematically shown in side elevational cross-section, includes a front section 92, a second section 94, a third section 96, a fourth section 98, and a back plate 100. There is an inlet 102 into second section 94 for supplying coating liquid to first metering slot 104 via pump 106 to thereby form a lowermost layer 108. There is an inlet 110 into third section 96 for supplying coating liquid to second metering slot 112 via pump 114 to form layer 116. There is an inlet 118 into fourth section 98 for supplying coating liquid to metering slot 120 via pump 122 to form layer 124. There is an inlet 126 into back plate 100 for supplying coating liquid to metering slot 128 via pump 130 to form layer 132. Each slot 104, 112, 120, 128 includes a transverse distribution cavity. Front section 92 includes an inclined slide surface 134, and a coating lip 136. There is a second inclined slide surface 138 at the top of second section 94. There is a third inclined slide surface 140 at the top of third section 96. There is a fourth inclined slide surface 142 at the top of fourth section 98. Back plate 100 extends above inclined slide surface 142 to form a back land surface 144. Residing adjacent the coating apparatus or hopper 16 is a coating backing roller 20 about which a web 12 is conveyed. Coating layers 108, 116, 124, 132 form a multilayer composite which forms a coating bead 146 between lip 136 and substrate 12. Typically, the coating hopper 16 is movable from a non-coating position toward the coating backing roller 20 and into a coating position. Although coating apparatus 16 is shown as having four metering slots, coating dies having a larger number of metering slots (as many as nine or more) are well known and may be used to practice the method of the present invention.

Coating fluids are comprised principally of polymeric resins dissolved in a suitable solvent. Suitable resins include any polymeric material that may be used to form a transparent film. Practical examples of resins currently used to form optical films include polyvinyl alcohols for polarizers, polyvinylbutyrals for glass laminates, acrylics, and polystyrene as protective covers and substrates, as well as cellulosics, polycarbonates, and polyarylates, polyolefins, fluoroplastics (e.g. polyvinylfluoride and polyvinylidene fluoride), sulfones for protective covers, compensation plates, and electrode substrates. In the method of the present invention, there are no particular limitations as to the type polymers or blends of polymers that may be used to form optical films.

In terms of solvents for the aforementioned resin materials, suitable solvents include, for example, chlorinated solvents (methylene chloride and 1,2 dichloroethane), alcohols (methanol, ethanol, n-propanol, isopropanol, n-butanol, isobutanol, diacetone alcohol, phenol, and cyclohexanol), ketones (acetone, methylethyl ketone, methylisobutyl ketone, and cyclohexanone), esters (methyl acetate, ethyl acetate, n-propyl acetate, isopropyl acetate, isobutyl acetate, and n-butyl acetate), aromatics (toluene and xylenes) and ethers (tetrahydrofuran, 1,3-dioxolane, 1,2-dioxolane, 1,3-dioxane, 1,4-dioxane, and 1,5-dioxane). Water may also be used as a solvent. Coating solutions may also be prepared with a blend of the aforementioned solvents.

Coating fluids may also contain additives to act as converting aids. Converting aids include plasticizers and surfactants, and these additives are generally specific to the type of polymer film. For example, plasticizers suitable for polycarbonate, polyethersulfone, and cellulose triacetate films include phthalate esters (diethylphthalate, dibutylphthalate, dicyclohexylphthalate, dioctylphthalate, and butyl octylphthalate), adipate esters (dioctyl adipate), and phosphate esters (tricresyl phosphate and triphenyl phosphate). For the watersoluble polyvinyl alcohols, on the other hand, suitable plasticizers include polyhydric alcohols such as glycerin and ethylene glycol as well as amine alcohols such as ethanolamine. Plasticizers may be used here as coating aids in the converting operation to minimize premature film solidification at the coating hopper and to improve drying characteristics of the wet film. In the method of the present invention, plasticizers may be used to minimize blistering, curl and delamination of resin films during the drying operation. In a preferred embodiment of the present invention, plasticizers may be added to the coating fluid at a total concentration of up to 50% by weight relative to the concentration of polymer in order to mitigate defects in the final resin film.

Coating fluids may also contain surfactants as coating aids to control artifacts related to flow after coating. Artifacts created by flow after coating phenomena include mottle, repellencies, orange-peel (Bernard cells), and edgewithdraw. For polymeric resins dissolved in organic solvents, surfactants used control flow after coating artifacts include siloxane and fluorochemical compounds. Examples of commercially available surfactants of the siloxane type include: 1.) Polydimethylsiloxanes such as DC200 Fluid from Dow Corning, 2.) Poly(dimethyl, methylphenyl)siloxanes such as DC510 Fluid from Dow Corning, and 3.) Polyalkyl substituted polydimethysiloxanes such as DC190 and DC1248 from Dow Corning as well as the L7000 Silwet series (L7000, L7001, L7004 and L7230) from Union Carbide, and 4.) Polyalkyl substituted poly(dimethyl, methylphenyl)siloxanes such as SF1023 from General Electric. Examples of commercially available fluorochemical surfactants include: 1.) Fluorinated alkyl esters such as the Fluorad series (FC430 and FC431) from the 3M Corporation, 2.) Fluorinated polyoxyethylene ethers such as the Zonyl series (FSN, FSN100, FSO, FSO100) from Du Pont, 3.) Acrylate polyperfluoroalkyl ethylacrylates such as the F series (F270 and F600) from NOF Corporation, and 4.) Perfluoroalkyl derivatives such as the Surflon series (S383, S393, and S8405) from the Asahi

Glass Company.

For polymeric resins dissolved in aqueous solvents, appropriate surfactants include those suitable for aqueous coating as described in numerous publications (see for example Surfactants: Static and dynamic surface tension by YM Tricot in Liquid Film Coating, pp 99-136, SE Kistler and PM Schweitzer editors, Chapman and Hall [1997]). Surfactants may include nonionic, anionic, cationic and amphoteric types. Examples of practical surfactants include polyoxyethylene ethers, such as polyoxyethylene (8) isooctylphenyl ether, polyoxyethylene (10) isooctylphenyl ether, and polyoxyethylene (40) isooctylphenyl ether, and fluorinated polyoxyethylene ethers such as the Zonyl series commercially available from Du Pont.

In the method of the present invention, there are no particular limits as to the type of surfactant used. In the method of the present invention, surfactants are generally of the non-ionic type. In a preferred embodiment of the present invention, non-ionic compounds of either the siloxane or fluorinated type are added to the uppermost layers when films are prepared with organic solvents.

In terms of surfactant distribution, surfactants are most effective when present in the uppermost layers of the multilayer coating. In the uppermost layer, the concentration of surfactant is preferably 0.001 - 1.000 % by weight and most preferably 0.010 - 0.500 %. In addition, lesser amounts of surfactant may be used in the second uppermost layer to minimize diffusion of surfactant away from the uppermost layer. The concentration of surfactant in the second uppermost layer is preferably 0.000 - 0.200 % by weight and most preferably between 0.000-0.100 % by weight. Because surfactants are only necessary in the uppermost layers, the overall amount of surfactant remaining in the final dried film is small.

Although surfactants are not required to practice the method of the current invention, surfactants do improve the uniformity of the coated film. In particular, mottle nonuniformities are reduced by the use of surfactants. In transparent resin films, mottle nonuniformities are not readily visualized during casual inspection. To visualize mottle artifacts, organic dyes may be added to the uppermost layer to add color to the coated film. For these dyed films, nonuniformities are easy to see and quantify. In this way, effective surfactant types and levels may be selected for optimum film uniformity.

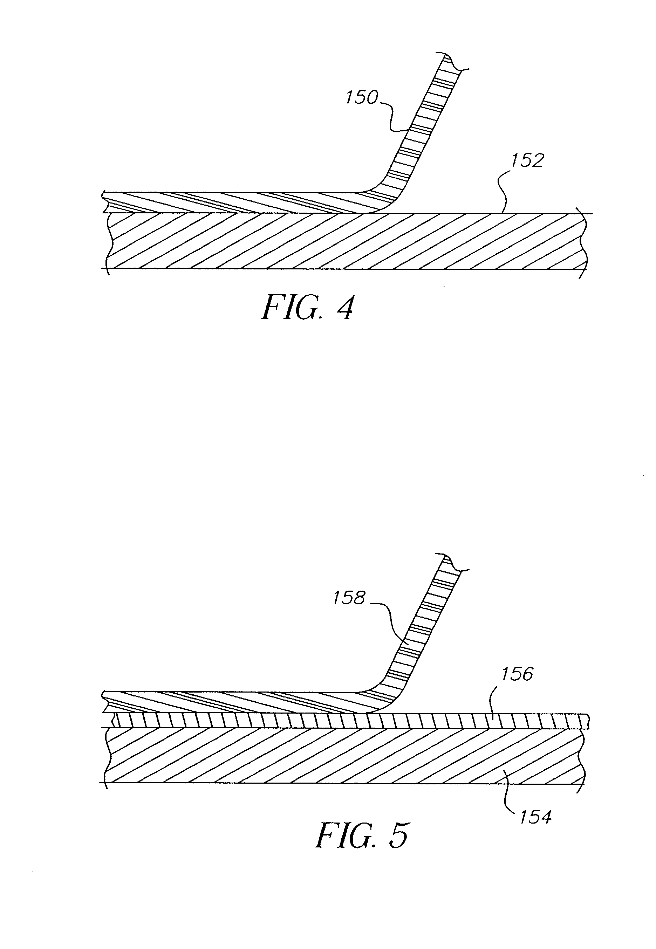

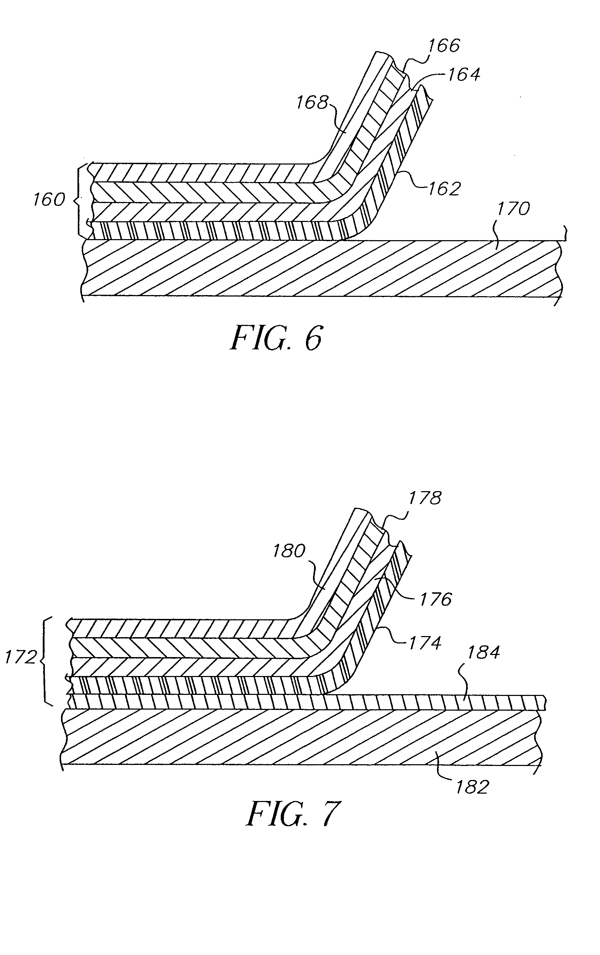

Turning next to Figures 4 through 7, there are presented cross-sectional illustrations showing various film configurations prepared by the method of the present invention. In Figure 4, a single-layer optical film 150 is shown partially peeled from a carrier substrate 152. Optical film 150 may be formed either by applying a single liquid layer to the carrier substrate 152 or by applying a multiple layer composite having a composition that is substantially the same among the layers. Alternatively in Figure 5, the carrier substrate 154 may have been pretreated with a subbing layer 156 that modifies the adhesive force between the single layer optical film 158 and the substrate 154. Figure 6 illustrates a multiple layer film 160 that is comprised of four compositionally discrete layers including a lowermost layer 162 nearest to the carrier support 170, two intermediate layers 164, 166, and an uppermost layer 168. Figure 6 also shows that the entire multiple layer composite 160 may be peeled from the carrier substrate 170. Figure 7 shows a multiple layer composite film 172 comprising a lowermost layer 174 nearest to the carrier substrate 182, two intermediate layers 176, 178, and an uppermost layer 180 being peeled from the carrier substrate 182. The carrier substrate 182 has been treated with a subbing layer 184 to modify the adhesion between the composite film 172 and substrate 182. Subbing layers 156 and 184 may be comprised of a number of polymeric materials such as polyvinyacetals, polycarbonates, polyurethanes, cellulosics, acrylics, gelatin and poly(acrylonitrile-co-vinylidene chloride-co-acrylic acid). The choice of materials used in the subbing layer may be optimized empirically by those skilled in the art.

The method of the present invention may also include the step of coating over a previously prepared composite of resin film and carrier substrate. For example, the coating and drying system 10 shown in Figures 1 and 2 may be used to apply a second multilayer film to an existing optical film/substrate composite. If the film/substrate composite is wound into rolls before applying the subsequent coating, the process is called a multi-pass coating operation. If coating and drying operations are carried out sequentially on a machine with multiple coating stations and drying ovens, then the process is called a tandem coating operation. In this way, thick films may be prepared at high line speeds without the problems associated with the removal of large amounts of solvent from a very thick wet film. Moreover, the practice of multi-pass or tandem coating also has the advantage of minimizing other artifacts such as streak severity, mottle severity, and overall film nonuniformity.

The practice of tandem coating or multi-pass coating requires some minimal level of adhesion between the first-pass film and the carrier substrate. In some cases, film/substrate composites having poor adhesion are observed to blister after application of a second or third wet coating in a multi-pass operation. To avoid blister defects, adhesion must be greater than 0.3 N/m between the first-pass resin film and the carrier substrate. This level of adhesion may be attained by a variety of web treatments including various subbing layers and various electronic discharge treatments. However, excessive adhesion between the applied film and substrate is undesirable since the film may be damaged during subsequent peeling operations. In particular, film/substrate composites having an adhesive force of greater than 250 N/m have been found to peel poorly. Films peeled from such excessively, well-adhered composites exhibit defects due to tearing of the film and/or due to cohesive failure within the film. In a preferred embodiment of the present invention, the adhesion between the resin film and the carrier substrate is less than 250 N/m. Most preferably, the adhesion between resin film and the carrier substrate is between 0.5 and 25 N/m.

The method of the present invention is suitable for application of resin coatings to a variety of substrates such as polyethylene terephthalate (PET), polyethylene naphthalate (PEN), polystyrene, cellulose triaceate and other polymeric films. Polymeric substrates may be unstretched, unixially stretched or biaxially stretched films or sheets. Additional substrates may include paper, laminates of paper and polymeric films, glass, cloth, aluminum and other metal supports. In some cases, substrates may be pretreated with subbing layers or electrical discharge devices. Substrates may also be pretreated with functional layers containing various binders and addenda. There are no particular requirements regarding the thickness of the substrate. For the optical resin films prepared here the substrate is PET with a thickness of either 100 or 175 μm. The method of the present invention may be practiced using substrates having a thickness of 5 to 500 μm.

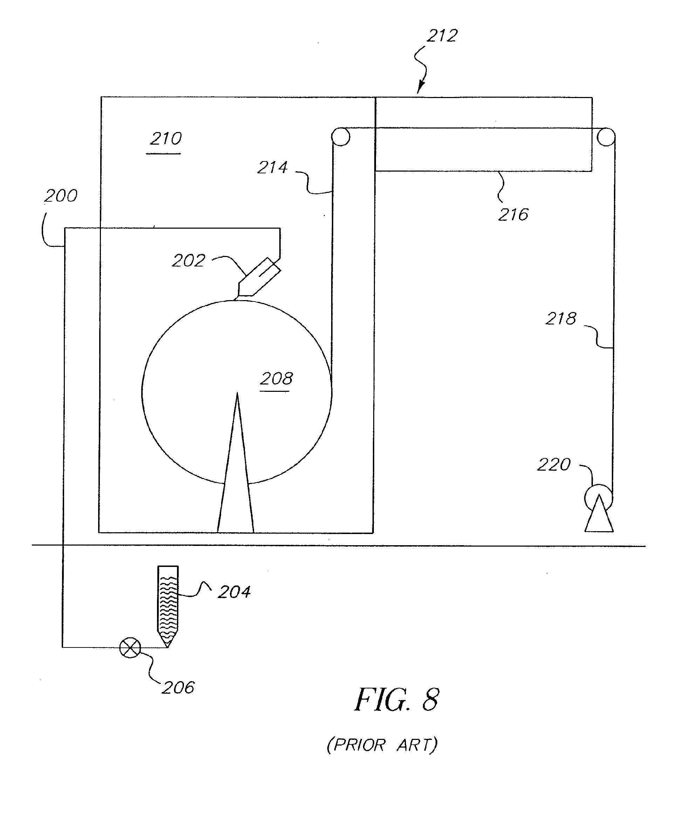

The prior art method of casting resin films is illustrated in Figure 8. As shown in Figure 8, a viscous polymeric dope is delivered through a feed line 200 to an extrusion hopper 202 from a pressurized tank 204 by a pump 206. The dope is cast onto a highly polished metal drum 208 located within a first drying section 210 of the drying oven 212. The cast film 214 is allowed to partially dry on the moving drum 208 and is then peeled from the drum 208. The cast film 214 is then conveyed to a final drying section 216 to remove the remaining solvent. The final dried film 218 is then wound into rolls at a wind-up station 220. The prior art cast film typically has a thickness in the range of from 40 to 200 μm.

Coating methods are distinguished from casting methods by the process steps necessary for each technology. These process steps in turn affect a number of tangibles such as fluid viscosity, converting aids, substrates, and hardware that are unique to each method. In general, coating methods involve application of dilute low viscosity liquids to thin flexible substrates, evaporating the solvent in a drying oven, and winding the dried film/substrate composite into rolls. In contrast, casting methods involve applying a concentrated viscous dope to a highly polished metal drum or band, partially drying the wet film on the metal substrate, stripping the partially dried film from the substrate, removing additional solvent from the partially dried film in a drying oven, and winding the dried film into rolls. In terms of viscosity, coating methods require very low viscosity liquids of less than 5,000 cp. In the practice of the method of the present invention the viscosity of the coated liquids will generally be less than 2000 cp and most often less than 1500 cp. Moreover, in the method of the present invention the viscosity of the lowermost layer is preferred to be less than 200 cp. and most preferably less than 100 cp. for high speed coating application. In contrast, casting methods require highly concentrated dopes with viscosity on the order of 10,000-100,000 cp for practical operating speeds. In terms of converting aids, coating methods generally involve the use of surfactants as converting aids to control flow after coating artifacts such as mottle, repellencies, orange peel, and edge withdraw. In contrast, casting methods do not require surfactants. Instead, converting aids are only used to assist in the stripping and conveyance operations in casting methods. For example, lower alcohols are sometimes used as converting aids in cast optical films to minimize abrasion artifacts during conveyance through drying ovens. In terms of substrates, coating methods generally utilize thin (10-250 micron) flexible supports. In contrast, casting methods employ thick (1-100 mm), continuous, highly polished metal drums or rigid bands. As a result of these differences in process steps, the hardware used in coating is conspicuously different from those used in casting as can be seen by a comparison of the schematics shown in Figures 1 and 8, respectively.

The advantages of the present invention are demonstrated by the following practical examples given below.

## EXAMPLE 1

This example describes the formation of a thin polyvinyl alcohol (PVA) film suitable for the formation of a polarizer or compensation film. In this example, the polyvinyl alcohol was the fully hydrolyzed type (greater than 98.5 % saponified) with a weight average molecular weight of 98,000 daltons. The coating apparatus 16 illustrated in Figure 1 was used to apply four liquid layers to a moving substrate 12, 170 of untreated polyethylene terephthalate (PET) to form a single layer film as illustrated earlier in Figure 6. The substrate speed was 25 cm/s. All coating fluids were comprised of polyvinyl alcohol dissolved in solvent of 95:5 water:ethanol where the ratio is by weight. The lowermost layer 162 had a viscosity of 45 cp. and a wet thickness of 10 μm on the moving substrate 170. The second 164 and third 166 layers each had a viscosity of 620 cp. and had a combined final wet thickness of 135 μm on the moving substrate 170. The uppermost layer 168 had a viscosity of 185 cp. and a wet thickness of 10 μm on the moving substrate 170. The uppermost layer 168 also contained a surfactant (polyoxyethylene (10) isooctylphenyl ether) at a weight percent of 0.10%. Coatings were applied at a temperature of 40°C. The gap between the coating lip 136 and the moving substrate 12 (see Figure 3) was 200 μm. The pressure differential across the coating bead 146 was adjusted between 0-10 cm of water to establish a uniform coating. The temperature in the drying sections 66, 68, 70 was 25°C. The temperature in the drying sections 72, 74 was 50°C. The temperature in the drying sections 76, 78, 80 was 95°C. The temperature in the drying section 82 was 25°C. The composite of PVA film and PET substrate was wound into rolls.

When peeled from the untreated PET substrate, the final dry film had a thickness of 12 microns. The peeled PVA film had a good appearance, was smooth and clear, was free from wrinkles and cockle artifacts and had an in-plane retardation of less than 1.0 nm. Properties of this PVA film are summarized in Table I.

**EXAMPLE 2**

This example describes the single pass formation of a relatively thin PVA film on an untreated support. The conditions were identical to those described in Example 1 except that the combined wet thickness of the second and third layers 164, 166 was increased to 290 μm. The composite of PVA film and PET substrate was wound into rolls. When peeled from the subbed PET substrate, the final dry film had a thickness of 24 μm. The peeled PVA film had a good appearance, was smooth and clear, was free from wrinkles and cockle artifacts and had an in-plane retardation of less than 1.0 nm. Properties of this PVA film are summarized in Table I.

**EXAMPLE 3**

This example describes the single pass formation of thin PVA film on a subbed support. The conditions were identical to those described in Example 1, except that the PET support was pretreated with a subbing layer of poly(acrylonitrile-co-vinylidene chloride-co-acrylic acid) at 100 mg/sq-ft. The composite of PVA film, subbing layer, and PET substrate was wound into rolls. When peeled from the subbed PET substrate, the final dry film had a thickness of 12 microns. The peeled PVA film had a good appearance, was smooth and clear, was free from wrinkles and cockle artifacts and had an in-plane retardation of less than 1.0 nm. Properties of this PVA film are summarized in Table I.

**EXAMPLE 4**

This example describes the formation of a relatively thick PVA film on a subbed support using a two-pass coating operation. The conditions were identical to those described in Example 1, except that the PET support was pretreated with a subbing layer of poly(acrylonitrile-co-vinylidene chloride-co-acrylic acid) at 100 mg/sq-ft as in Example 3. This first pass composite of PVA film (dry thickness of 12 μm), subbing layer, and PET substrate was wound into rolls. Subsequently, this first pass composite was coated a second time using the conditions of Example 1 except that the combined wet thickness of the second and third layers was increased to 445 microns. The two-pass composite of PVA film, subbing layer, and PET substrate was wound into rolls. When peeled from the subbed PET substrate, the final dry film had a thickness of 48 microns. The peeled PVA film had a good appearance, was smooth and clear, was free from wrinkles and cockle artifacts, and had an in-plane retardation of less than 1.0 nm. Properties of this PVA film are summarized in Table I.

**EXAMPLE 5**

This example describes the formation of a thick PVA film on a subbed support using a three-pass coating operation. The conditions were identical to those described in Example 1 except that the PET support was pretreated with a subbing layer of poly(acrylonitrile-co-vinylidene chloride-co-acrylic acid) at 100 mg/sq-ft. In addition, the combined wet thickness of the second and third layers at 290 μm for each pass. The composite of PVA film, subbing layer, and PET substrate was wound into rolls. The wound composite was then over-coated with the combined wet thickness of the second and third layers at 290 μm. The composite of PVA film, subbing layer, and PET substrate was wound into rolls. A third and final coating was applied to the composite. The final dry film had a thickness of 72 microns. The peeled PVA film had a good appearance, was smooth and clear, was free from wrinkles and cockle artifacts, and had an in-plane retardation of less than 1.0 nm. Properties of this PVA film are summarized in Table I.

**COMPARATIVE EXAMPLE 1**

This example describes the optical properties of a film formed by prior art casting methods. A PVA film is prepared by the casting method. The apparatus 210 illustrated in Figure 8 was used to apply a single layer to a highly polished metal drum. The speed of the metal substrate was 7.5 cm/s. The casting fluid was comprised of polyvinyl alcohol dissolved in water. The PVA casting solution had a viscosity of 30,000 cp. The cast film was applied at a temperature of 82°C, partially dried on the moving drum, peeled from the drum, dried further, and wound into rolls. The final PVA film had a thickness of 48 microns. This film exhibited a slight cockle and had an in-plane retardation of 36 nm. Properties of this PVA film are summarized in Table I.

### EXAMPLE 6

This example describes the formation of a cellulose acetate film suitable for use as a protective cover, electrode substrate, or compensation film. The cellulose acetate polymer was the highly substituted type, i.e. cellulose triacetate (CTA) with approximately 58.0-62.5 % acetic acid content, with a weight average molecular weight of 228,000 daltons. In this example, a very thin CTA film is formed by a single pass coating operation. The coating apparatus 16 illustrated in Figure 1 was used to apply four liquid layers to a moving substrate 12, 170 of untreated polyethylene terephthalate (PET) to form a single layer film as illustrated earlier in Figure 6. The substrate speed was 25 cm/s. All coating fluids were comprised of CTA dissolved in a blend of two solvents (a 1:1 ratio of 1,3-dioxolane:acetone where the ratio is by weight). The lowermost layer 162 had a viscosity of 60 cp. and a wet thickness of 11 µm on the moving substrate 170. The second 164 and third 166 layers each had a viscosity of 860 cp. and had a combined final wet thickness of 69 µm on the moving substrate 170. The second 164 and third 166 layers also each contained plasticizers (diethyl phthalate) at a concentration of 15% by weight relative to the amount of CTA polymer. In addition, the third layer 166 also contained a fluorinated surfactant (Surflon S8405) at concentration of 0.02 %. The uppermost layer 168 had a viscosity of 113 cp. and a wet thickness of 22 µm on the moving substrate 170. The uppermost layer 168 also contained a fluorinated surfactant (Surflon S8405) at a weight percent of 0.20%. Coatings were applied at a temperature of 24°C. The gap between the coating lip 136 and the moving substrate 12 (see Figure 3) was 200 µm. The pressure differential across the coating bead 146 was adjusted between 0-10 cm of water to establish a uniform coating. The temperature in the drying sections 66 and 68 was 40°C. The temperature in the drying section 70 was 50°C. The temperature in the drying sections 72, 74, 76, 78, 80 was 95°C. The temperature in the drying section 82 was 25°C. The composite of CTA film and PET substrate was wound into rolls. When peeled from the untreated PET substrate, the final dry film had a thickness of 5 µm. The peeled CTA film had a good appearance, was smooth and clear, was free from wrinkles and cockle artifacts and had an in-plane retardation of less than 1.0 nm. Properties of this cellulose acetate film are summarized in Table I.

### EXAMPLE 7

This example describes the single pass formation of a very thin cellulose acetate film. The conditions were identical to those described in Example 6 except that the combined wet thickness of the second and third layers 164 and 166 was increased to 154 µm. The composite of CTA film and PET substrate was wound into rolls. When peeled from the subbed PET substrate, the final dry film had a thickness of 10 µm. The peeled CTA film had a good appearance, was smooth and clear, was free from wrinkles and cockle artifacts and had an in-plane retardation of less than 1.0 nm. Properties of this cellulose acetate film are summarized in Table I.

### EXAMPLE 8

This example describes the single pass formation of a thin cellulose acetate film. The conditions were identical to those described in Example 6 except that the combined wet thickness of the second and third layers 164 and 166 was increased to 324 µm. The composite of CTA film and PET substrate was wound into rolls. When peeled from the subbed PET substrate, the final dry film had a thickness of 20 µm. The CTA film had a good appearance, was smooth and clear, was free from wrinkles and cockle artifacts and had an in-plane retardation of less than 1.0 nm. Properties of this cellulose acetate film are summarized in Table I.

### EXAMPLE 9

This example describes the single pass formation a cellulose acetate film. The conditions were identical to those described in Example 6 except that the combined wet thickness of the second and third layers 164 and 166 was increased to 665 µm. The composite of CTA film and PET substrate was wound into rolls. When peeled from the subbed PET substrate, the final dry film had a thickness of 50 µm. The peeled CTA film had a good appearance, was smooth and clear, was free from wrinkles and cockle artifacts and had an in-plane retardation of less than 1.0 nm. Properties of this cellulose acetate film are summarized in Table I.

### EXAMPLE 10

This example describes the formation of a cellulose acetate film using a two-pass coating operation. The conditions were identical to those described in Example 6 except that the solvent system was changed to a 9:1 ratio of methylene chloride:methanol where ratios are by weight. In addition, the lowermost layer 162 had a viscosity of 66 cp. and a wet thickness of 11 µm on the moving substrate 170. The second 164 and third 166 layers each had a viscosity of 1600 cp. and had a combined final wet thickness of 199 µm on the moving substrate 170. The second 164 and third 166 layers each contained plasticizers (diethyl phthalate) at a concentration of 20 % by weight relative to the amount of cellulose acetate polymer. In addition, the third layer 166 also contained a fluorinated surfactant (FC431) at concentration of 0.05 %. The uppermost layer 168 had a viscosity of 111 cp. and a wet thickness of 22 µm on the moving substrate 170. The uppermost 1 layer 168 also contained a fluorinated surfactant (FC431) at a weight percent of 0.25 %. The composite of CTA film and PET substrate was wound into rolls. The wound composite was then over-coated with the combined wet thickness of the second and third layers at 199 µm. The composite of CTA film and PET substrate was wound into rolls. The final dry film had a thickness of 40 µm. The peeled CTA film was smooth and clear, was free from wrinkles and cockle artifacts and had an in-plane retardation of less than 1.0 nm. Properties of this cellulose acetate film are summarized in Table I.

**EXAMPLE 11**

This example describes the formation of a cellulose acetate film using a three-pass coating operation. The conditions were identical to those described in Example 10 except that the wound composite of CTA film and PET support of Example 10 was over-coated with a third and final pass. For this final overcoat, the second 164 and third 166 layers had a combined final wet thickness of 411 µm on the moving substrate 170. The composite of CTA film and PET substrate was wound into rolls. The final dry film had a thickness of 80 µm. The peeled CTA film was smooth and clear, was free from wrinkles and cockle artifacts and had an in-plane retardation of less than 1.0 nm. Properties of this cellulose acetate film are summarized in Table I.

**EXAMPLE 12**

This example describes the formation of an acrylic film suitable for use as a protective cover or compensation film. The acrylic polymer was the polymethylmethacrylate type (PMMA) with a weight average molecular weight of 455,000 daltons. In this example, a very thin PMMA film is formed by a single pass coating operation. The coating apparatus 16 illustrated in Figure 1 was used to apply four liquid layers to a moving substrate 12, 170 of untreated polyethylene terephthalate (PET) to form a single layer film as illustrated earlier in Figure 6. The substrate speed was 25 cm/s. All coating fluids were comprised of PMMA dissolved in solvent system of 8:2 methylethylketone:toluene where the ratio is by weight. The lowermost layer 162 had a viscosity of 23 cp. and a wet thickness of 11 µm on the moving substrate 170. The second 164 and third 166 layers each had a viscosity of 820 cp. and had a combined final wet thickness of 66 µm on the moving substrate 170. In addition, the third layer 166 also contained a fluorinated surfactant (Surflon S8405) at concentration of 0.05 %. The uppermost layer 168 had a viscosity of 195 cp. and a wet thickness of 22 µm on the moving substrate 170. The uppermost layer 168 also contained a fluorinated surfactant (Surflon S8405) at a weight percent of 0.20%. Coatings were applied at a temperature of 24°C. The gap between the coating lip 136 and the moving substrate 12 (see Figure 3) was 200 µm. The pressure differential across the coating bead 146 was adjusted between 0-10 cm of water to establish a uniform coating. The temperature in the drying sections 66 and 68 was 25°C. The temperature in the drying section 70 was 50°C. The temperature in the drying sections 72, 74, 76, 78, 80 was 120°C. The temperature in the drying section 82 was 25°C. The composite of PMMA film and PET substrate was wound into rolls. The composite of PMMA film and PET substrate was free from wrinkles and cockle artifacts. When peeled from the untreated PET substrate, the final dry film had a thickness of 10 µm. The peeled PMMA film had a good appearance, was smooth and clear, and had an in-plane retardation of less than 1.0 nm. Properties of this acrylic film are summarized in Table I.

**EXAMPLE 13**

This example describes the single pass formation of a thin PMMA film. The conditions were identical to those described in Example 12 except that the combined wet thickness of the second and third layers 164 and 166 was Increased to 147 µm. The composite of PMMA film and PET substrate was wound into rolls. The composite of PMMA film and PET substrate was free from wrinkles and cockle artifacts. When peeled from the subbed PET substrate, the final dry film had a thickness of 20 µm. The peeled PMMA film had a good appearance, was smooth and clear, and had an in-plane retardation of less than 1.0 nm. Properties of this PMMA film are summarized in Table I.

**EXAMPLE 14**

This example describes the single pass formation of a thin PMMA film. The conditions were identical to those described in Example 12 except that the combined wet thickness of the second and third layers 164 and 166 was increased to 228 µm. The composite of PMMA film and PET substrate was wound into rolls. The composite of PMMA film and PET substrate was free from wrinkles and cockle artifacts. When peeled from the subbed PET substrate, the final dry film had a thickness of 30 μm. The PMMA film had a good appearance, was smooth and clear, and had an in-plane retardation of less than 1.0 nm. Properties of this PMMA film are summarized in Table I.

**EXAMPLE 15**

This example describes the single pass formation a PMMA film. The conditions were identical to those described in Example 12 except that the combined wet thickness of the second and third layers 164 and 166 was increased to 309 μm. The composite of PMMA film and PET substrate was wound into rolls. The composite of PMMA film and PET substrate was free from wrinkles and cockle artifacts. When peeled from the subbed PET substrate, the final dry film had a thickness of 40 μm. The peeled PMMA film had a good appearance, was smooth and clear, and had an in-plane retardation of less than 1.0 nm. Properties of this PMMA film are summarized in Table I.

**EXAMPLE 16**

This example describes the formation of a PMMA film using a two-pass coating operation. The conditions were identical to those described in Example 12 except that the combined wet thickness of the second and third layers 164 and 166 was increased to 309 μm as described in Example 15. The composite of PMMA film and PET substrate was dried, wound into rolls, and then subsequently over-coated with an additional pass. The second pass was conducted with the combined wet thickness of the second and third layers at 309 μm as described in Example 15. The final composite of PMMA film and PET substrate was wound into rolls. The composite of PMMA film and PET substrate was free from wrinkles and cockle artifacts. The final dry film had a thickness of 80 μm. The peeled PMMA film was smooth and clear, and had an in-plane retardation of less than 1.0 nm. Properties of this PMMA film are summarized in Table I.

**COMPARATIVE EXAMPLE 2**

This example describes the formation of a PMMA:PET composite having poor peeling properties. In this example, the PET support has a subbing layer of poly(acrylonitrile-co-vinylidene chloride-co-acrylic acid) at a dry coverage of 100 mg/sq-m. Otherwise, the conditions for Comparative Example 1 were identical to those described in Example 12 except that the combined wet thickness of the second and third layers 164 and 166 was increased to 309 μm. The final dry film had a thickness of 20 μm. When dried, the PMMA film could not be peeled from the subbed PET substrate without tearing the film. For this composite film, the adhesive strength of the PMMA film to the subbed PET substrate was greater than 250 N/m.

**EXAMPLE 17**

This example describes the formation of a polyvinyl film suitable for use as a protective cover or formation of a compensation film. The polyvinyl is the polyvinyl butyral (PVB) type with 12% vinyl alcohol content. In the lowermost layer, the PVB had a weight average molecular weight of 174,000 daltons. For all other layers, a separate lot of PVB was used with a weight average molecular weight of 99,600 daltons. In this example, a very thin PVB film is formed by a single pass coating operation. The coating apparatus 16 illustrated in Figure 1 was used to apply four liquid layers to a moving substrate 12, 170 of untreated polyethylene terephthalate (PET) to form a single layer film as illustrated earlier in Figure 6. The substrate speed was 25 cm/s. All coating fluids were comprised of PVB dissolved in methylethylketone. The lowermost layer 162 had a viscosity of 28 cp. and a wet thickness of 11 μm on the moving substrate 170. The second 164 and third 166 layers each had a viscosity of 330 cp. and had a combined final wet thickness of 61 μm on the moving substrate 170. The uppermost layer 168 had a viscosity of 80 cp. and a wet thickness of 11 μm on the moving substrate 170. The uppermost layer 168 also contained a fluorinated surfactant (FC431) at a weight percent of 0.20%. Coatings were applied at a temperature of 24°C. The gap between the coating lip 136 and the moving substrate 12 (see Figure 3) was 200 μm. The pressure differential across the coating bead 146 was adjusted between 0-10 cm of water to establish a uniform coating. The temperature in the drying sections 66 and 68 was 40°C. The temperature in the drying section 70 was 50°C. The temperature in the drying sections 72, 74, 76, 78, 80 was 95°C. The temperature in the drying section 82 was 25°C. The composite of PVB film and PET substrate was wound into rolls. The composite of PVB film and PET substrate was free from wrinkles and cockle artifacts. When peeled from the untreated PET substrate, the final dry film had a thickness of 10 μm. The peeled PVB film had a good appearance, was smooth and clear, and had an in-plane retardation of less than 1.0 nm. Properties of this PVB film are summarized in Table I.

**EXAMPLE 18**

This example describes the single pass formation of a thin PVB film. The conditions were identical to those described in Example 17 except that the combined wet thickness of the second and third layers 164 and 166 was increased to 131 µm. The composite of PVB film and PET substrate was wound into rolls. The composite of PVB film and PET substrate was free from wrinkles and cockle artifacts. When peeled from the subbed PET substrate, the final dry film had a thickness of 20 µm. The peeled PVB film had a good appearance, was smooth and clear, and had an in-plane retardation of less than 1.0 nm. Properties of this PVB film are summarized in Table I.

**EXAMPLE 19**

This example describes the single pass formation of a thin PVB film. The conditions were identical to those described in Example 17 except that the combined wet thickness of the second and third layers 164 and 166 was increased to 271 µm. The composite of PVB film and PET substrate was wound into rolls. The composite of PVB film and PET substrate was free from wrinkles and cockle artifacts. When peeled from the subbed PET substrate, the final dry film had a thickness of 40 µm. The PVB film had a good appearance, was smooth and clear, and had an in-plane retardation of less than 2.0 nm. Properties of this PVB film are summarized in Table I.

**EXAMPLE 20**

This example describes the single pass formation a PVB film. The conditions were identical to those described in Example 17 except that the combined wet thickness of the second and third layers 164 and 166 was increased to 411 µm. The composite of PVB film and PET substrate was wound into rolls. The composite of PVB film and PET substrate was free from wrinkles and cockle artifacts. When peeled from the subbed PET substrate, the final dry film had a thickness of 60 µm. The peeled PVB film had a good appearance, was smooth and clear, and had an in-plane retardation of less than 2.0 nm. Properties of this PVB film are summarized in Table I.

**EXAMPLE 21**

This example describes the formation of a thick PVB film using a single-pass coating operation. The conditions were identical to those described in Example 1 except that the combined wet thickness of the second and third layers 164 and 166 was increased to 551 µm. The final composite of PVB film and PET substrate was wound into rolls. The composite of PVB film and PET substrate was free from wrinkles and cockle artifacts. The final dry film had a thickness of 80 µm. The peeled PVB film was smooth and clear, and had an in-plane retardation of less than 2.0 nm. Properties of this PVB film are summarized in Table I.

**EXAMPLE 22**

This example describes the formation of a sulfone film suitable for use as a protective cover, electrode substrate, or compensation film. The sulfone polymer was the polyethersulfone (PES) type with a weight average molecular weight of 32,000 daltons. In this example, a very thin PES film is formed by a single pass coating operation. The coating apparatus 16 illustrated in Figure 1 was used to apply four liquid layers to a moving substrate 12, 170 of untreated polyethylene terephthalate (PET) to form a single layer film as illustrated earlier in Figure 6. The substrate speed was 25 cm/s. All coating fluids were comprised of PES dissolved in 1,3-dioxolane. The lowermost layer 162 had a viscosity of 20 cp. and a wet thickness of 11 µm on the moving substrate 170. The second 164 and third 166 layers each had a viscosity of 195 cp. and had a combined final wet thickness of 34 µm on the moving substrate 170. In addition, the third layer 166 also contained a fluorinated surfactant (Surflon S8405) at concentration of 0.01 %. The uppermost layer 168 had a viscosity of 80 cp. and a wet thickness of 22 µm on the moving substrate 170. The uppermost layer 168 also contained a fluorinated surfactant (Surflon S8405) at a weight percent of 0.20%. Coatings were applied at a temperature of 24°C. The gap between the coating lip 136 and the moving substrate 12 (see Figure 3) was 200 µm. The pressure differential across the coating bead 146 was adjusted between 0-10 cm of water to establish a uniform coating. The temperature in the drying sections 66 and 68 was 40°C. The temperature in the drying section 70 was 50°C. The temperature in the drying sections 72, 74, 76, 78, 80 was 95°C. The temperature in the drying section 82 was 25°C. The composite of PES film and PET substrate was wound into rolls. When peeled from the untreated PET substrate, the final dry film had a thickness of 10 µm. The peeled PES film had a good appearance, was smooth and clear, was free from wrinkles and cockle artifacts and had an in-plane retardation of less than 2.0 nm. Properties of this sulfone film are summarized in Table I.

**EXAMPLE 23**

This example describes the single pass formation of a thin PES film. The conditions were identical to those described in Example 22 except that the combined wet thickness of the second and third layers 164 and 166 was increased to 94 µm. The composite of PES film and PET substrate was wound into rolls. When peeled from the subbed PET substrate, the final dry film had a thickness of 20 µm. The peeled PES film had a good appearance, was smooth and clear, was free from wrinkles and cockle artifacts and had an in-plane retardation of less than 2.0 nm. Properties of this PES film are summarized in Table I.

**EXAMPLE 24**

This example describes the single pass formation of a thin PES film. The conditions were identical to those described in Example 22 except that the combined wet thickness of the second and third layers 164 and 166 was increased to 153 µm. The composite of PES film and PET substrate was wound into rolls. When peeled from the subbed PET substrate, the final dry film had a thickness of 30 µm. The PES film had a good appearance, was smooth and clear, was free from wrinkles and cockle artifacts, and had an in-plane retardation of less than 2.0 nm. Properties of this PES film are summarized in Table I.

**EXAMPLE 25**

This example describes the single pass formation a PES film. The conditions were identical to those described in Example 22 except that the combined wet thickness of the second and third layers 164 and 166 was increased to 211 µm. The composite of PES film and PET substrate was wound into rolls. When peeled from the subbed PET substrate, the final dry film had a thickness of 40 µm. The peeled PES film had a good appearance, was smooth and clear, was free from wrinkles and cockle artifacts and had an in-plane retardation of less than 3.0 nm. Properties of this PES film are summarized in Table I.

**EXAMPLE 26**

This example describes the formation of a PES film using a three-pass coating operation. The conditions were identical to those described in Example 22 except that the combined wet thickness of the second and third layers 164 and 166 was increased to 94 µm as described above in Example 23. The wound composite of PES film and PET substrate was subsequently over-coated with two additional passes. Each additional pass was conducted with the combined wet thickness of the second and third layers at 211 µm as described in Example 25. The final composite of PES film and PET substrate was wound into rolls. The final dry film had a thickness of 100 µm. The peeled PES film was smooth and clear, was free from wrinkles and cockle artifacts and had an in-plane retardation of less than 2.0 nm. Properties of this PES film are summarized in Table I.

**EXAMPLE 27**

This example describes the formation of a polycarbonate (PC) film suitable for use as a protective cover, electrode substrate, or compensation film. The polycarbonate was a homopolymer of the Bisphenol-A type with a weight average molecular weight of 54,000 daltons. In this example, a very thin PC film is formed by a single pass coating operation. The coating apparatus 16 illustrated in Figure 1 was used to apply four liquid layers to a moving substrate 12, 170 of untreated polyethylene terephthalate (PET) to form a single layer film as illustrated earlier in Figure 6. The substrate speed was 25 cm/s. All coating fluids were comprised of PC dissolved in methylene chloride. The lowermost layer 162 had a viscosity of 17 cp. and a wet thickness of 14 µm on the moving substrate 170. The second 164 and third 166 layers each had a viscosity of 660 cp. and had a combined final wet thickness of 27 µm on the moving substrate 170. In addition, the third layer 166 also contained a fluorinated surfactant (Surflon S8405) at concentration of 0.02 %. The uppermost layer 168 had a viscosity of 107 cp. and a wet thickness of 22 µm on the moving substrate 170. The uppermost layer 168 also contained a fluorinated surfactant (Surflon S8405) at a weight percent of 0.10%. Coatings were applied at a temperature of 16°C. The gap between the coating lip 136 and the moving substrate 12 (see Figure 3) was 200 µm. The pressure differential across the coating bead 146 was adjusted between 0-10 cm of water to establish a uniform coating. The temperature in the drying sections 66 and 68 was 40°C. The temperature in the drying section 70 was 50°C. The temperature in the drying sections 72, 74, 76, 78, 80 was 120°C. The temperature in the drying section 82 was 25°C. The composite of PC film and PET substrate was wound into rolls. When peeled from the untreated PET substrate, the final dry film had a thickness of 10 µm. The peeled PC film was free from scratch and wrinkle artifacts and had an in-plane retardation of less than 5.0 nm. Properties of this polycarbonate film are summarized in Table I.

**EXAMPLE 28**

This example describes the single pass formation of a thin PC film. The conditions were identical to those described in Example 27 except that the combined wet thickness of the second and third layers 164 and 166 was increased to 73 μm. The composite of PC film and PET substrate was wound into rolls. When peeled from the subbed PET substrate, the final dry film had a thickness of 20 μm. The peeled PC film had a good appearance, was smooth and clear, was free from scratch and wrinkles artifacts, and had an in-plane retardation of less than 5.0 nm. Properties of this PC film are summarized in Table I.

**EXAMPLE 29**

This example describes the single pass formation of a thin PC film. The conditions were identical to those described in Example 27 except that the combined wet thickness of the second and third layers 164 and 166 was increased to 120 μm. The composite of PC film and PET substrate was wound into rolls. When peeled from the subbed PET substrate, the final dry film had a thickness of 30 μm. The PC film had a good appearance, was smooth and clear, was free from scratch and wrinkle artifacts, and had an in-plane retardation of less than 5.0 nm. Properties of this PC film are summarized in Table I.

**EXAMPLE 30**

This example describes the single pass formation a PC film. The conditions were identical to those described in Example 27 except that the combined wet thickness of the second and third layers 164 and 166 was increased to 166 μm. The composite of PC film and PET substrate was wound into rolls. When peeled from the subbed PET substrate, the final dry film had a thickness of 40 μm. The peeled PC film had a good appearance, was smooth and clear, was free from scratch and wrinkle artifacts, and had an in-plane retardation of less than 5.0 nm. Properties of this PC film are summarized in Table I.

**EXAMPLE 31**

This example describes the formation of a thin PC film using two pass coating operation. The conditions were identical to those described in Example 27 except that the wound composite of PC film and PET substrate of Example 1 was subsequently over-coated with an additional pass. The second pass was conducted with the combined wet thickness of the second and third layers at 27 μm as described in Example 27. The composite of PC film and PET substrate was wound into rolls. When peeled from the untreated PET substrate, the final dry film had a thickness of 20 μm. The peeled PC film had a good appearance, was smooth and clear, was free from scratch and wrinkle artifacts, and had an in-plane retardation of less than 5.0 nm. Properties of this polycarbonate film are summarized in Table I.

**EXAMPLE 32**

This example describes the formation of a PC film using a three-pass coating operation. The conditions were identical to those described in Example 27 except that the combined wet thickness of the second and third layers 164 and 166 was increased to 73 μm as described in Example 28. The wound composite of PC film and PET substrate was subsequently over-coated with two additional passes. Each additional pass was conducted with the combined wet thickness of the second and third layers at 73 μm as described in Example 28. The final composite of PC film and PET substrate was wound into rolls. The final dry film had a thickness of 60 μm. The peeled PC film was smooth and clear, was free from scratch and wrinkle artifacts, and had an in-plane retardation of less than 5.0 nm. Properties of this PC film are summarized in Table I.

**COMPARATIVE EXAMPLE 3**

This example describes the formation of a PET/PC composite having poor peeling properties. In this example, the PET support has a subbing layer of poly(acrylonitrile-co-vinylidene chloride-co-acrylic acid) with a dry coverage of 100 mg/sq-m. Otherwise, the conditions for Comparative Example 3 were identical to those described in Example 28. The final dry film had a thickness of 20 μm. When dried, the PC film could not be peeled from the subbed PET substrate. For this composite film, the adhesive strength of the PC film to the subbed PET substrate was greater than 250 N/m.

TABLE I

| Example | Resin | Thickness | Retardation | Trans | Haze | Roughness | Adhesion |
|---------|-------|-----------|-------------|-------|------|-----------|----------|
| 1 | PVA | 12 μm | 0.5 nm | 93.1 | 0.3 % | 1.0 nm | 0.5 N/m |
| 2 | PVA | 24 | 0.8 | 93.1 | 0.3 | 0.7 | 0.3 |
| 3 | PVA | 12 | 0.1 | 93.1 | 0.3 | 1.1 | 4.0 |
| 4 | PVA | 48 | 1.0 | 93.1 | 0.4 | 0.7 | 7.0 |
| 5 | PVA | 72 | 0.2 | 93.1 | 0.3 | 1.1 | 8.0 |
| 6 | CTA | 5 | 0.1 | 94.7 | 0.3 | 2.0 | ND |
| 7 | CTA | 10 | 0.1 | 94.8 | 0.4 | 1.1 | 3.1 |
| 8 | CTA | 20 | 0.1 | 94.7 | 0.3 | 0.6 | 0.9 |
| 9 | CTA | 50 | 0.2 | 94.1 | 0.6 | 1.3 | 1.1 |
| 10 | CTA | 40 | 0.2 | 94.6 | 0.4 | 1.2 | 0.5 |
| 11 | CTA | 80 | 0.1 | 94.3 | 0.6 | 1.3 | 0.3 |
| 12 | PMMA | 10 | 0.1 | 94.3 | 0.3 | 0.3 | 14.7 |
| 13 | PMMA | 20 | 0.1 | 94.4 | 0.3 | 0.4 | 1.2 |
| 14 | PMMA | 30 | 0.1 | 94.3 | 0.3 | 0.4 | 0.5 |
| 15 | PMMA | 40 | 0.1 | 94.3 | 0.3 | 0.4 | 0.4 |
| 16 | PMMA | 80 | 0.3 | 94.3 | 0.3 | 0.8 | 0.5 |
| 17 | PVB | 10 | 0.1 | 94.5 | 0.2 | 0.9 | 1.4 |
| 18 | PVB | 20 | 0.2 | 94.6 | 0.2 | 0.7 | 1.3 |
| 19 | PVB | 40 | 1.2 | 94.5 | 0.3 | 1.5 | 1.6 |
| 20 | PVB | 60 | 1.1 | 94.6 | 0.5 | 0.7 | 1.8 |
| 21 | PVB | 80 | 1.6 | 94.5 | 0.3 | 1.8 | 1.9 |
| 22 | PES | 10 | 1.2 | 90.8 | 0.2 | 0.7 | ND |
| 23 | PES | 20 | 1.0 | 90.9 | 0.3 | 0.6 | ND |
| 24 | PES | 30 | 1.6 | 90.7 | 0.2 | 0.7 | ND |
| 25 | PES | 40 | 2.6 | 90.4 | 0.2 | 0.7 | ND |
| 26 | PES | 100 | 1.8 | 90.4 | 0.4 | 1.2 | ND |
| 27 | PC | 10 | 2.0 | 92.1 | 1.0 | 1.3 | 15.6 |
| 28 | PC | 20 | 3.8 | 92.0 | 1.0 | 1.0 | 3.0 |
| 29 | PC | 30 | 2.5 | 92.3 | 0.8 | 0.9 | 2.0 |
| 30 | PC | 40 | 2.8 | 92.3 | 0.7 | 0.7 | 1.2 |
| 31 | PC | 20 | 3.8 | 92.0 | 0.6 | 1.1 | 0.7 |
| 32 | PC | 60 | 4.5 | 92.1 | 0.8 | 0.7 | 0.5 |
| Comp 1 | PVA | 48 | 36.0 | 92.8 | 0.8 | 1.3 | NA |

The following tests were used to determine the film properties given in Table I.

*Thickness*. Thickness of the final peeled film was measured in microns using a Model EG-225 gauge from the Ono Sokki Company.

*Retardation.* In-plane retardation ($R_e$) of peeled films were determined in nanometers (nm) using a Woollam M-2000V Spectroscopic Ellipsometer at wavelengths from 370 to 1000 nm. In-plane retardation values in Table I are computed for measurements taken at 590 nm. In-plane retardation is defined by the formula:

$$R_e = |n_x - n_y| \times d$$

where $R_e$ is the in-plane retardation at 590 nm, $n_x$ is the index of refraction of the peeled film in the slow axis direction, $n_y$ is the is the index of refraction of the peeled film in the fast axis direction, and d is the thickness of the peeled film in nanometers (nm). Thus, $R_e$ is the absolute value of the difference in birefringence between the slow axis direction and the fast axis direction in the plane of the peeled film multiplied by the thickness of the film.

*Transmittance and Haze.* Total transmittance (Trans) and haze are measured using the Haze-Gard Plus (Model HB-4725) from BYK-Gardner. Total transmittance is all the light energy transmitted through the film as absorbed on an integrating sphere. Transmitted haze is all light energy scattered beyond 2.5° as absorbed on an integrating sphere.

*Surface Roughness.* Average surface roughness (Ra) was determined in nanometers (nm) by scanning probe microscopy using TappingMode™ Atomic Force Microscopy, Model D300 from Digital Instruments.

*Adhesion.* The adhesive strength of the coated samples was measured in Newtons per meter (N/m) using a modified 180° peel test with an Instron 1122 Tensile Tester with a 500 gram load cell. First, 0.0254 m (one inch) wide strips of the coated sample were prepared. Delamination of the coating at one end was initiated using a piece of 3M Magic Tape. An additional piece of tape was then attached to the delaminated part of the coating and served as the gripping point for testing. The extending tape was long enough to extend beyond the support such that the Instron grips did not interfere with the testing. The sample was then mounted into the Instron 1122 Tensile Tester with the substrate clamped tin the upper grip and the coating/tape assembly clamped in the bottom grip. The average force (in units of Newtons) required to peel the coating off the substrate at a 180° angle at speed of 2 inches/min (50.8 mm/min) was recorded. Using this force value the adhesive strength in units of N/m was calculated using the equation:

$$S_A = F_p(1\text{-cos }\theta)/w$$

wherein $S_A$ is the adhesive strength, $F_p$ is the peel force, $\theta$ is the angle of peel (180°), and w is the width of the sample (0.0254 m).

*Residual Solvent.* A qualitative assessment of residual solvents remaining in a dried film is done by first peeling the film from the carrier substrate, weighing the peeled film, incubating the film in an oven at 150 °C for 16 hours, and finally weighing the incubated film. Residual solvent is expressed as percentage of the weight difference divided by the post-incubation weight.

From the foregoing, it will be seen that this invention is one well adapted to obtain all of the ends and objects hereinabove set forth together with other advantages which are apparent and which are inherent to the apparatus.

**Claims**

1. A coating method for forming an optical resin film comprising the steps of:

   (a) applying a liquid optical resin /solvent mixture onto a moving, discontinuous carrier substrate; and
   (b) drying the liquid resin/solvent mixture to substantially remove the solvent yielding a composite of a resin film adhered to the discontinuous carrier substrate, the resin film being releasably adhered to the discontinuous carrier substrate thereby allowing the resin film to be peeled from the discontinuous carrier substrate.

2. A coating method as recited in claim 1 wherein:
   the liquid resin/solvent mixture is applied using slide bead coating die with a multilayer composite being formed on a slide surface thereof.

3. A coating method as recited in claim 2 wherein:
   the viscosity of each liquid layer of the multilayer composite is less than 5000 cp.

4. A coating method as recited in claim 2 wherein:
   an uppermost layer of the multilayer composite contains a surfactant.

5. A coating method as recited in claim 1 further comprising the steps of:

   (a) separating the resin film from the carrier substrate immediately after the drying step; and
   (b) winding the optical resin film into at least one roll.

6. A coating method as recited in claim 1 wherein:

   the resin film is adhered to the carrier substrate with an adhesive strength of less than about 250 N/m.

7. A coating method as recited in claim 5 further comprising the step of:

   reducing residual solvent in the optical resin film to less than 10% by weight prior to the separating step .

8. A composite film comprising:

   a resin film coated on a discontinuous carrier substrate, the resin film having a thickness in the range of from about 1 to about 500 µm, the resin film having an in-plane retardation that is less than 20 nm, the resin film being adhered to the carrier substrate with an adhesive strength of less than about 250 N/m.

9. A resin film comprising:

   a coated layer of resin having an in-plane retardation that is less than about 20 nm.

10. A resin film as recited in claim 9 wherein:
    the coated layer of resin has a light transmittance of at least about 85 percent and a haze value of less than about 1.0 percent.

*14*

*10*

*22*

*20*

*16*

| 66 | 68 | 70 | 72 | 74 | 76 | 78 | 80 | 82 |

*24*

*26*

*50*
*48*
*46*
*44*

*54*

*12*

*52*

*18*

*28*
*30*
*32*

*36*

*34*

*38*

*40*

*42*

*FIG. 1*

*14*

*10*

*22*

*20*

*16*

| 66 | 68 | 70 | 72 | 74 | 76 | 78 | 80 | 82 |

*24*

*50*
*48*
*46*
*44*

*54*

*12*

*52*

*18*

*64*

*56*

*58*

*62*

*60*

*28*
*30*
*32*

*36*

*34*

*38*

*40*

*42*

*FIG. 2*

FIG. 3

FIG. 4

FIG. 5

FIG. 6

FIG. 7

FIG. 8

(PRIOR ART)